(19) Europäisches Patentamt
European Patent Office
Office européen des brevets

(11) **EP 1 480 322 B1**

(12) **EUROPÄISCHE PATENTSCHRIFT**

(45) Veröffentlichungstag und Bekanntmachung des Hinweises auf die Patenterteilung:
**02.07.2008 Patentblatt 2008/27**

(51) Int Cl.:
*H02M 5/297* *(2006.01)*     *H02M 5/27* *(2006.01)*

(21) Anmeldenummer: **04008990.6**

(22) Anmeldetag: **15.04.2004**

(54) **Steuerverfahren für einen Stromrichter**

Control method for a power converter

Procédé de control d'un convertisseur de puissance

(84) Benannte Vertragsstaaten:
**AT CH DE FR IT LI SE**

(30) Priorität: **21.05.2003 DE 10323009**

(43) Veröffentlichungstag der Anmeldung:
**24.11.2004 Patentblatt 2004/48**

(73) Patentinhaber: **SIEMENS AKTIENGESELLSCHAFT 80333 München (DE)**

(72) Erfinder: **Kramer, Hagen 91056 Erlangen (DE)**

(56) Entgegenhaltungen:
**GB-A- 2 294 821**

- **ERICKSON R W ET AL: "A new family of matrix converters" IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001, ANNUAL CONFERENCE OF THE IEEE INDUSTRIAL ELECTRONICS SOCIETY, NEW YORK, NY : IEEE, US, Bd. VOL. 1 OF 3. CONF. 27, 29. November 2001 (2001-11-29), Seiten 1515-1520, XP010573002 ISBN: 0-7803-7108-9**

## EP 1 480 322 B1

**Beschreibung**

Die Erfindung betrifft ein Steuerverfahren für einen Stromrichter, der als zwei- oder dreiphasige Brückenschaltung mit einem Transformator aufgebaut ist, mit Brückenzweigen, die aus einer beliebigen Anzahl identischer Submodule bestehen, wobei die Leistung des Netzes in Kondensatoren der Submodule zwischengespeichert wird.

Erickson et al, A New Family of Matrix Converters, in 2001 IEEE, Seiten 1515 bis 1520, beschreibt ein Steuerverfahren für einen Stromrichter, das vollständig ohne Transformator auskommt.

Andere Stromrichter, die insbesondere geeignet sind zur Stromversorgung von Schienenfahrzeugen, sind mit einem Mittelfrequenztransformator verbunden. Sie sollen den bisher üblichen, mit Netzfrequenz betriebenen Traktionstransformator ersetzen. Sie können jedoch, ebenfalls zusammen mit einem Mittelfrequenztransformator, auch zur Stromversorgung von stationären Einrichtungen verwendet werden.

In der Traktionstechnik bestehen Bestrebungen, den konventionellen Traktionstransformator durch Umformertechnik abzulösen. Da die Netzfrequenz in Bahnnetzen klein ist, in vielen Ländern kleiner als die Frequenz im öffentlichen Netz, sind die Baugröße und das Gewicht der Traktionstransformatoren sehr hoch. Die Primärwicklung des Traktionstransformators ist im Betrieb mit der Netzspannung verbunden. An den Sekundärwicklungen sind Traktionsstromrichter, die vorzugsweise mit einem oder mehreren Vierquadrantenstellern als Eingangsstromrichter ausgeführt sind, sowie Hilfsbetriebeumrichter für Klimatechnik, Beleuchtung und andere Verbraucher angeschlossen.

Es sind andere Lösungen bekannt, mit denen leistungselektronische Umformer direkt an die Fahrdrahtspannung angeschlossen werden. Diese Umrichter müssen auf die weltweit vorhandenen Fahrdrahtspannungen eingerichtet sein, die zwecks Minimierung der Übertragungsverluste sehr hoch gewählt sind. Das erfordert die Reihenschaltung von Halbleiterbauelementen oder von Teilstromrichtern.

Es wurde bereits ein modular aufgebauter Hochspannungsumrichter in Vollbrückenschaltung vorgeschlagen, dessen Brückenzweige aus der Serienschaltung einer beliebigen Anzahl von Zweipolen (Submodule) bestehen, wobei die Zweipole bei verschiedenen steuerbaren Schaltzuständen eine unterschiedliche Klemmenspannung aufweisen. Der Brückenausgang ist vorzugsweise mit einem Mittelfrequenztransformator verbunden, dessen Frequenz deutlich höher ist als die Netzfrequenz. Die Submodule haben einen internen Energiespeicher (Kondensator) und sind so aufgebaut, dass ihre Klemmenspannung unabhängig von der Stromrichtung einen positiven oder negativen Wert oder den Wert Null annehmen kann. Mit den Submodulen werden treppenförmige Spannungen sowohl auf der Netzseite als auch auf der Mittelfrequenzseite realisiert.

Die Primärspannung des Mittelfrequenztransformators wird ohne zusätzliche Steuerungselemente auf einen konstanten Effektivwert gesteuert und stabilisiert.

Der Aufbau erlaubt eine streng modulare Realisierung des Stromrichters. Der Stromrichter kann auf einfache Weise so ausgelegt werden, dass er mit verschiedenen Netzfrequenzen und -spannungen betrieben werden kann, so dass eine Mehrsystemnutzung ermöglicht wird.

Jeder der vier Stromrichterzweige muss spannungsmäßig, das heißt bezüglich der Anzahl der Submodule, so ausgelegt sein, dass er die Summe aus halber Netzspannungsamplitude (inklusive der Toleranzen der Netzspannung) und halber Transformatorspannungsamplitude, die sich am Nennwert der Netzspannungsamplitude orientiert, aufbringen kann. Eine Stromrichterphase (Serienschaltung zweier Stromrichterzweige) ist spannungsmäßig somit etwa auf die doppelte Netzspannungsamplitude zu dimensionieren, obwohl an ihr nur die Netzspannungsamplitude abfallen muss. Sie muss deshalb deutlich überdimensioniert werden, was sich in einer hohen Anzahl von Submodulen äußert.

Nachteilig bei den vorbeschriebenen Hochspannungsumrichtern sind der hohe Aufwand für die Ansteuerung der großen Anzahl von Submodulen sowie der Aufwand für die Hochspannungsisolation.

Der Erfindung liegt die Aufgabe zugrunde, ein Steuerverfahren für einen Stromrichter der eingangs beschriebenen Art anzugeben, mit dem der Aufwand für den Umrichter durch Reduktion der Anzahl der Submodule minimiert werden kann.

Erfindungsgemäß wird die Aufgabe dadurch gelöst, dass die Primärspannung des Transformators aus der Netzspannung und den Spannungen an den Kondensatoren so gebildet wird, dass die Primärspannung beim zeitlichen Maximum der Netzspannung verringert und beim zeitlichen Nulldurchgang der Netzspannung erhöht wird durch Aufladung und Entladung der Kondensatoren.

Danach wird die aktuelle Amplitude der Ausgangsspannung an der Brückendiagonale auf einen Wert im Bereich bis zur maximal möglichen Spannungsamplitude, die von der aktuellen Summe der Spannungen der internen Energiespeicher der Submodule und dem aktuellen Netzspannungswert abhängig ist, gesteuert.

Die Erfindung macht sich die Möglichkeit zunutze, dass die Summenspannung der Energiespeicher (Kondensatoren) in den Submodulen einen wert einnehmen kann, der gleich oder gegebenenfalls sogar größer ist als die Netzspannung.

Mit dem erfindungsgemäßen Steuerverfahren bleiben die Verhältnisse bezüglich des Netzes gegenüber der vorgängerlösung unverändert. Die mit doppelter Netzgrundfrequenz pulsierende Leistung des Einphasennetzes wird in den Kondensatoren der Submodule zwischengespeichert. Durch das Ansteuerverfahren wird jedoch ein geänderter Leistungsfluss über den Mittelfrequenztransformator erreicht. Das Ansteuerverfahren basiert darauf, dass für die Transformatorprimärspannung die Differenz aus der Summe der Kondensatorspannungen und dem von der Netzspannung aufzubringenden Anteil genutzt wird. Das heißt, dass im zeitlichen Maximum der Netzspannung, wo bei netzseitigem cos phi = 1 die Leistung des Netzes am größten ist, nur eine geringe Transformatorspannung zur Verfügung steht, also über den Transformator nur eine relativ kleine Leistung übertragen werden kann. Anders sind die Verhältnisse im Spannungsnulldurchgang des Netzes. Hier kann die volle Summe der Kondensatorspannungen für die Transformatorprimärspannung genutzt werden und eine entsprechend große Leistung über den Transformator übertragen werden. Die Submodule speichern so eine größere, mit doppelter Netzfrequenz pulsierende Energie. Die Gesamtkapazität der Kondensatoren der Submodule muss für gleiche Spannungswelligkeit der Kondensatorspannung deshalb größer sein als bisher.

Vorteilhafte Ausgestaltungen der Erfindung sind den Unteransprüchen zu entnehmen.

In einer erfindungsgemäß besonders vorteilhaften Weise erfolgt die Ansteuerung so, dass die Stromamplituden in den einzelnen Stromrichterzweigen über der Zeit näherungsweise gleich groß sind. Damit wird eine gute, da bezüglich der Strombelastung gleichmäßigere Ausnutzung der Halbleiterbauelemente erreicht.

Das Steuerverfahren ist für die oben beschriebenen Stromrichter in Vollbrückenschaltung und in Halbbrückenschaltung gleichermaßen anwendbar.

Die Anzahl der Submodule und somit der Aufwand für Ansteuerung, Energieversorgung und Hochspannungsisolation kann mit dem Steuerverfahren deutlich verringert werden. Da die Stromrichterzweige nach Art einer Hochspannungskaskade aufgebaut werden müssen, wird bei einer verringerten Anzahl von Submodulen auch eine geringere Anzahl von Stützisolatoren benötigt.

Der Aufbau eines Zweiges mit Submodulen erfolgt in der bisher bekannten Weise, dass heißt mit Zweipolen, die einen internen Energiespeicher aufweisen und die bei verschiedenen Schaltzuständen unabhängig von der Stromrichtung eine unterschiedliche Klemmenspannung annehmen können.

Bei einer Beschaltung mit einem Mittelfrequenztransformator wird die Transformatorsekundärspannung beispielsweise durch einen Vierquadrantensteller, der an einem Gleichspannungszwischenkreis angeschlossen ist, gleichgerichtet. Schaltungsvarianten mit mehreren Sekundärwicklungen und mehreren Vierquadrantenstellern sind ebenfalls möglich. Gleiches gilt für die Anzahl der Gleichspannungszwischenkreise.

Die Ansteuerung der Stromrichterzweige erfolgt so, dass über die Klemmenspannung eines Submoduls stufenweise die Kondensatorspannung zu- oder abgeschaltet wird. Die Anzahl der Spannungsstufen hängt von der Anzahl der Submodule ab. Die netzseitige Spannung und die Mittelfrequenzspannung lassen sich bezüglich Frequenz, Phasenlage und Amplitude unabhängig voneinander vorgeben.

Die Erfindung wird nachfolgend in einem Ausführungsbeispiel anhand der zugehörigen Zeichnungen näher erläutert. Es zeigen:

Figur 1    den Aufbau des Stromrichters in Vollbrückenschaltung;

Figur 2    die Aufteilung eines Stromrichterzweiges in einzelne Submodule;

Figur 3    eine mögliche Realisierung für ein einzelnes Submodul;

Figur 4    ein Grundschwingungs-Ersatzschaltbild für den Stromrichter gemäß Figur 1;

Figur 5    den Zeitverlauf der Grundschwingungen von Netzspannung und Netzstrom mit dem bisherigen Verfahren;

Figur 6    den zugehörigen Zeitverlauf der Netzleistung und der mit doppelter Netzfrequenz pulsierenden Energie;

Figur 7    den zugehörigen Zeitverlauf der Grundschwingung von Transformatorspannung und -strom;

Figur 8    den zugehörigen Zeitverlauf der Transformatorleistung und deren über eine Periode der Transformatorgrundfrequenz gemittelten Wert;

Figur 9    den zugehörigen Zeitverlauf von Zweigspannung und Zweigstrom;

Figur 10    den zugehörigen Zeitverlauf von Zweigleistung und pulsierender Energie;

Figur 11    den Zeitverlauf der Grundschwingungen von Transformatorprimärspannung und -strom nach dem erfindungsgemäßen Steuerverfahren;

Figur 12    den zugehörigen Zeitverlauf der Transformatorleistung und deren über eine Periode der Transformatorgrundfrequenz gemittelten Wert;

Figur 13    den zugehörigen Zeitverlauf von Zweigspannung und Zweigstrom und

Figur 14    den zugehörigen Zeitverlauf von Zweigleistung und pulsierender Energie.

Figur 15    bzw.

Figur 16    den Vergleich der bisherigen mit der erfindungsgemäßen Ansteuerung bezüglich der Summe der Konden-satorspannungen $u_{d\Sigma}$ bzw. $u_{d\Sigma}$.

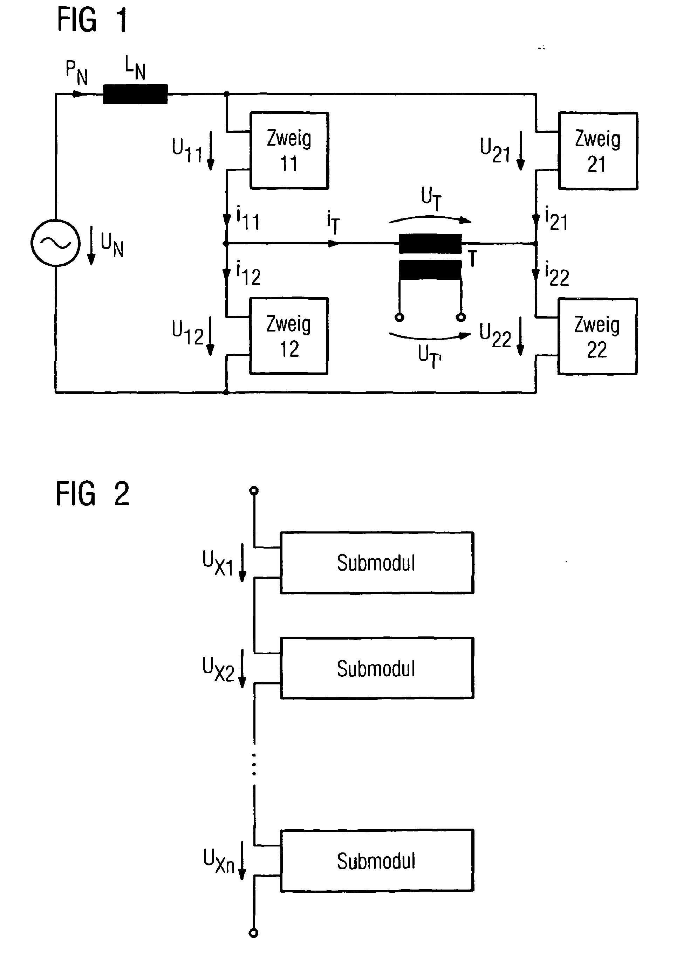

Figur 1 zeigt zunächst den allgemeinen Aufbau des Stromrichters in einer Version als Vollbrückenschaltung. Am Eingang des Stromrichters liegt die Netzspannung $u_N$ an. In Form einer Brückenschaltung sind vier Stromrichterzweige 11, 12, 21 und 22 angeordnet. An der Brückendiagonale befindet sich ein Mittelfrequenztransformator T mit der Primärspannung $u_T$ und der Sekundärspannung $u_T'$. Wie Figur 2 zeigt, bestehen die Stromrichterzweige 11, 12, 21, 22 jeweils aus mehreren Submodulen mit der Klemmenspannung $u_{x1}$ ... $u_{xn}$.

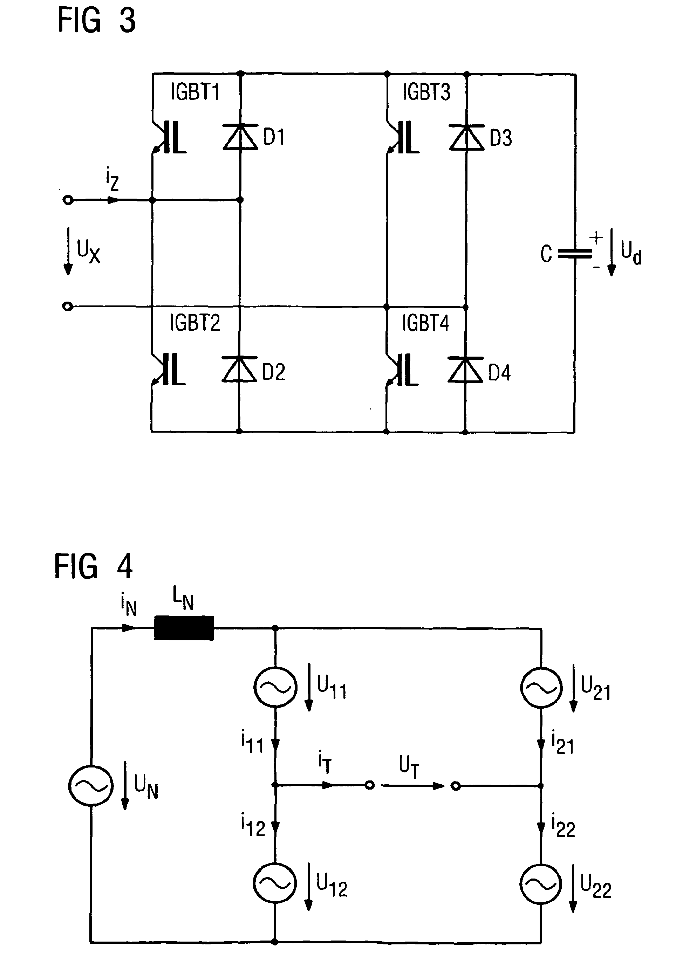

Eine mögliche Realisierung eines Submoduls ist in Figur 3 dargestellt. Das Submodul hat die Form einer Vollbrückenschaltung eines Spannungsumrichters, nur dass diese hier als einzelner Zweipol genutzt wird. Die Brük-kenschaltung besteht aus vier Leistungshalbleiterschaltern IGBT1...IGBT4 mit antiparallel geschalteten Dioden D1...D4. An die gleichstromseitigen Anschlüsse der Brückenschaltung ist ein Kondensator C geschaltet, der auf die Spannung $U_d$ aufgeladen ist. Mit dem Schalten der Leistungshalbleiterschalter IGBT1...IGBT4 entstehen Schaltzustände, mit denen die Klemmenspannung $u_x$, unabhängig von der Richtung des Stromes $i_z$ positiv, negativ oder auch Null (Kurzschluss) wird.

Unter der Annahme, dass in Figur 3 die Kondensatoren C aller Submodule einen gleichen Ausgangszustand mit der Kondensatorspannung $U_d$ haben und in den Figuren 1 und 2 eine Anzahl n von Submodulen je Stromrichterzweig 11, 12, 21, 22 vorhanden ist, kann die Spannung $u_{11}$, $u_{12}$, $u_{21}$, $u_{22}$ eines Stromrichterzweiges 11, 12, 21, 22 den Wertebereich $-n\,U_d...+nU_d$ annehmen und lässt sich somit in diskreten "Treppenstufen" der Spannung $U_d$ stellen.

Die Grundfrequenz der Transformatorgrößen Transformatorspannung $u_T$ und Transformatorstrom $i_T$ ist dabei deutlich größer als jene der Netzgrößen Netzspannung $u_N$ und Netzstrom. Das Verhältnis der Grundfrequenzen von Transformatorgrößen und Netzgrößen ist vorzugsweise ganzzahlig.

In Figur 4 ist ein Grundschwingungs-Ersatzschaltbild des Umrichters gemäß Figur 1 gezeigt. Hier ist eine Netzfrequenz von 16 2/3 Hz, also eine Periodendauer von 60 ms, und eine Transformatorfrequenz von 300 Hz zugrunde gelegt. Die mit doppelter Netzfrequenz pulsierende Leistung des Einphasennetzes wird in den Kondensatoren C der Submodule zwischengespeichert. Damit ist ein von der Netzfrequenz unabhängiger Energiefluss über den Transformator T möglich.

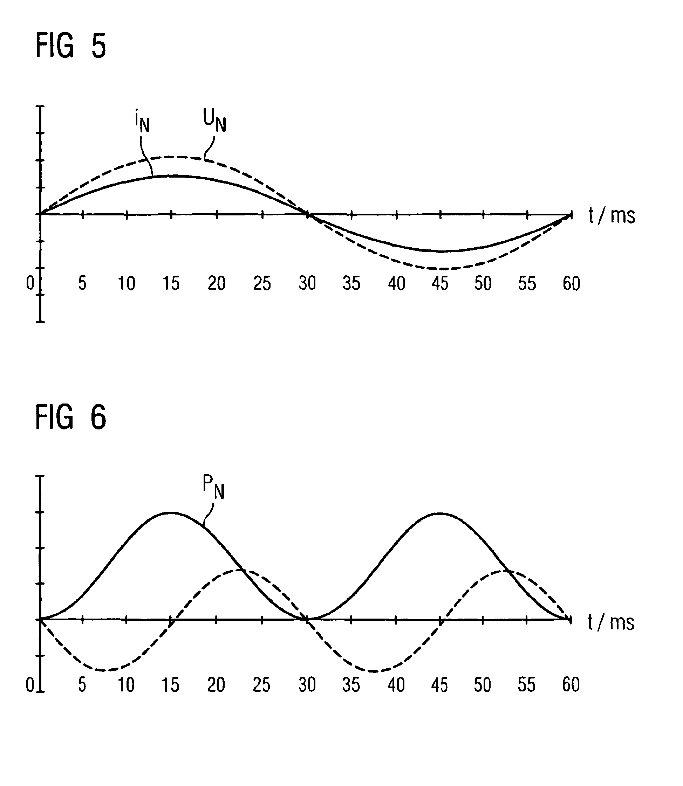

Figur 5 zeigt den Zeitlichen Verlauf der Netzspannung $u_N$ und des Netzstromes $i_N$, Figur 6 den Zeitlichen Verlauf der Netzleistung $p_N$ und der mit doppelter Netzfrequenz pulsierenden Energie.

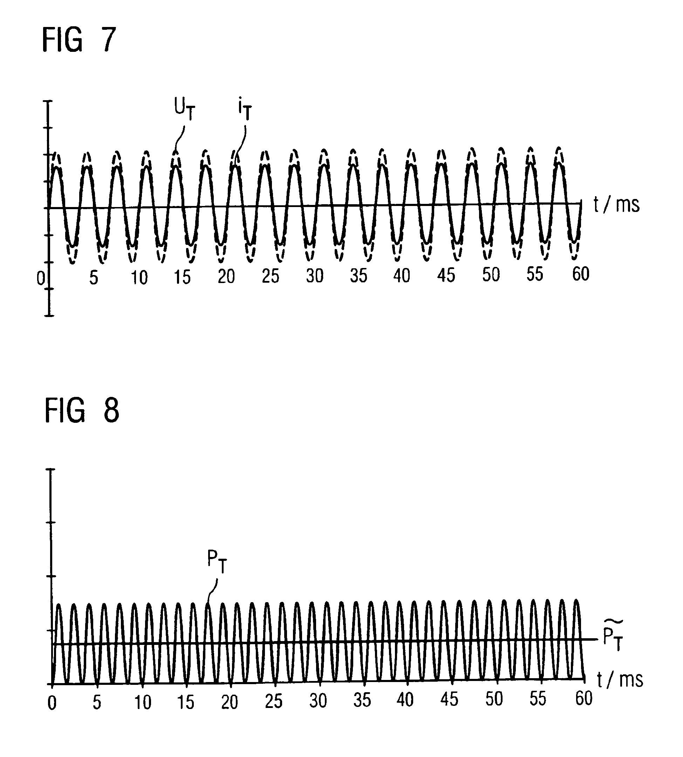

Bisher erfolgt die Steuerung so, dass die Grundschwingungs-Effektivwerte von Netzspannung $u_N$ (Nennwert) und Transformatorprimärspannung $u_T$ etwa gleich groß sind. Gleiches gilt für den Netzstrom $i_N$ und den Transformatorprimärstrom $i_T$. Beispielhafte Zeitliche Verläufe der Grundschwingungen von Transformatorprimärspannung $u_T$ und -primärstrom $i_T$ zeigt Figur 7. Bei dem gezeigten Beispiel erfolgt die Ansteuerung des beziehungsweise der sekundärseitigen Stromrichter so, dass die Grundschwingungen von Strom und Spannung primärseitig phasengleich sind. Die Zeitlichen Verläufe der Transformatorleistung $p_T$ sowie der über eine Periode der Transformatorgrundschwingung $\tilde{p}_T$-gemittelten Transformatorleistung sind in Figur 8 dargestellt.

Die Stromrichterzweige 11, 12, 21, 22 (Fig 1) können als eingeprägte Spannungsquellen angesehen werden, wobei die Submodule so nach dem bisherigen Verfahren angesteuert werden, dass sich folgende Grundschwingungsspannungen für die Stromrichterzweige 11, 12, 21, 22 ergeben:

Die folgende Beschreibung der Steuerverfahren ist auf die Grundschwingungen von Strom und Spannung auf der Netz- und Transformatorseite beschränkt, das heißt, der Pulsbetrieb wird vernachlässigt. Außerdem wird der Spannungsabfall über der Netzdrossel $L_N$ (Figuren 1 und 4) vernachlässigt. Figur 4 zeigt das Grundschwingungs-Ersatzschaltbild.

$$u_{11} = u_{22} = (u_N - u_T)/2$$

$$u_{12} = u_{21} = (u_N + u_T)/2$$

Dabei sind $u_N$ die Grundschwingung der Netzspannung und $u_T$ die Grundschwingung der Transformatorprimärspannung.

Bei dieser Ansteuerung werden sich die Grundschwingungen der Ströme wie folgt einstellen:

$$i_{11} = i_{22} = (i_N + i_T)/2$$

$$i_{12} = i_{21} = (i_N - i_T)/2$$

Dabei ist $i_N$ die Grundschwingung des Netzstromes, $i_T$ die Grundschwingung des Transformatorprimärstromes.

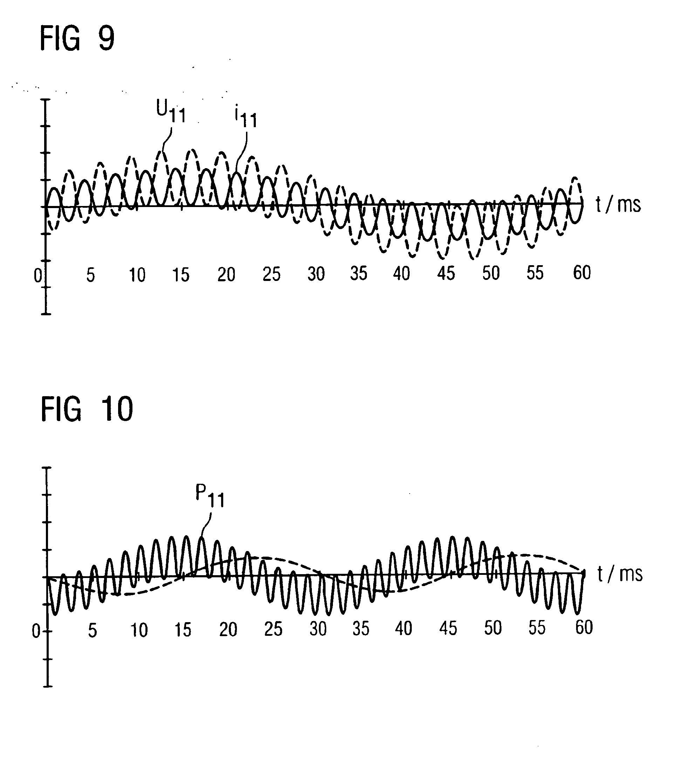

Die Zeitlichen Verläufe der Zweigspannung $u_{11}$ und des Zweigstromes $i_{11}$ unter der Annahme, dass die Ansteuerung derart erfolgt, dass die Grundschwingungen der Netzspannung $u_N$ und des Netzstromes $i_N$ die gleiche Phasenlage aufweisen und die Grundschwingungen der Transformatorprimärspannung $u_T$ und des Transformatorprimärstromes $i_T$ ebenfalls die gleiche Phasenlage aufweisen, sind in Figur 9 dargestellt. Die Zweigleistung $p_{11} = u_{11}*i_{11}$ sowie den pulsierende Anteil der zugehörigen Energie zeigt Figur 10.

Jeder der vier Stromrichterzweige 11, 12, 21, 22 muss spannungsmäßig, das heißt bezüglich der Anzahl der Submodule, so ausgelegt sein, dass er die Summe aus halber Netzspannungsamplitude (inklusive der Toleranzen der Netzspannung $u_N$) und halber Transformatorspannungsamplitude, die sich am Nennwert der Netzspannungsamplitude orientiert, aufbringen kann. Eine Umrichterphase (Serienschaltung zweier Stromrichterzweige 11, 12 beziehungsweise 21, 22) ist spannungsmäßig somit etwa auf die doppelte Netzspannungsamplitude zu dimensionieren, obwohl an ihr nur die Netzspannungsamplitude abfallen muss. Sie muss deshalb deutlich überdimensioniert werden, was sich in einer hohen Anzahl von Submodulen äußert.

Für das erfindungsgemäße Steuerverfahren wird dagegen von der Stabilisierung der Transformatorprimärspannung auf $U_T$ einen konstanten Effektivwert abgegangen.

Vielmehr wird die aktuelle Amplitude der Ausgangsspannung an der Brückendiagonale, die der Transformatorprimärspannung $u_T$ entspricht, auf einen Wert im Bereich bis zur maximal möglichen Spannungsamplitude, die von der aktuellen Summe der Spannungen der Kondensatoren C der Submodule und dem aktuellen Wert der Netzspannung $u_N$ abhängig ist, gesteuert.

Die maximal mögliche Spannungsamplitude am Ausgang ist

$$u_T = \sum u_x - \sqrt{2\ u_N}\ |\sin \omega_N t|.$$

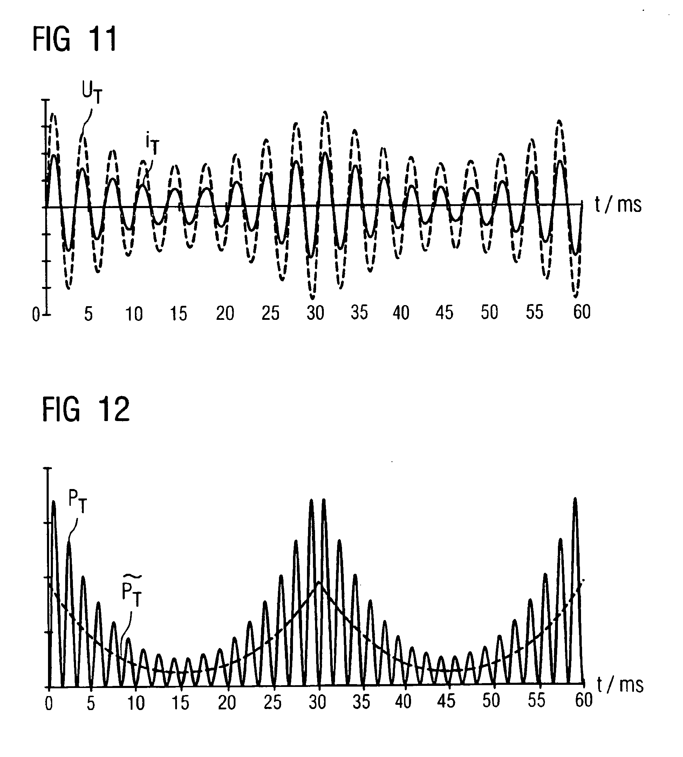

Beispielhafte Zeitverläufe der Grundschwingungen von Transformatorprimärspannung $u_T$ und Transformatorprimärstrom $i_T$ zeigt Figur 11. Auch hier kann die Ansteuerung wie gezeigt so erfolgen, dass die Grundschwingungen von Strom und Spannung primärseitig phasengleich sind. Der Zeitliche Verlauf der Transformatorleistung

$$p_T = u_T * i_T$$

sowie die über eine Periode der Transformatorgrundfrequenz gemittelte übertragene Transformatorleistung $\tilde{p}_T$ sind in Figur 12 dargestellt. Die Ansteuerung des beziehungsweise der sekundärseitigen Stromrichter erfolgt so, dass sich der in Figur 12 gezeigte Leistungsfluss einstellt. Dies kann durch entsprechende Phasenverschiebung zwischen Primär- und Sekundärspannung am Transformator T erreicht werden. Außerdem bestehen Optimierungsmöglichkeiten durch Anpassung der Höhe der Transformatorsekundärspannung $u_T$.

Auch bei dem erfindungsgemäßen Ansteuerverfahren können die einzelnen Stromrichterzweige 11, 12, 21, 22 als eingeprägte Spannungsquellen angesehen werden, wobei die Submodule so angesteuert werden, dass sich folgende Grundschwingungsspannungen für die Stromrichterzweige 11, 12, 21, 22 ergeben:

$$U_{11} = u_{22} = (u_N - u_T)/2$$

$$U_{12} = u_{21} = (u_N + u_T)/2.$$

Die Ströme werden sich dann wie folgt einstellen:

$$i_{11} = i_{22} = (i_N + i_T)/2$$

$$i_{12} = i_{21} = (i_N - i_T)/2.$$

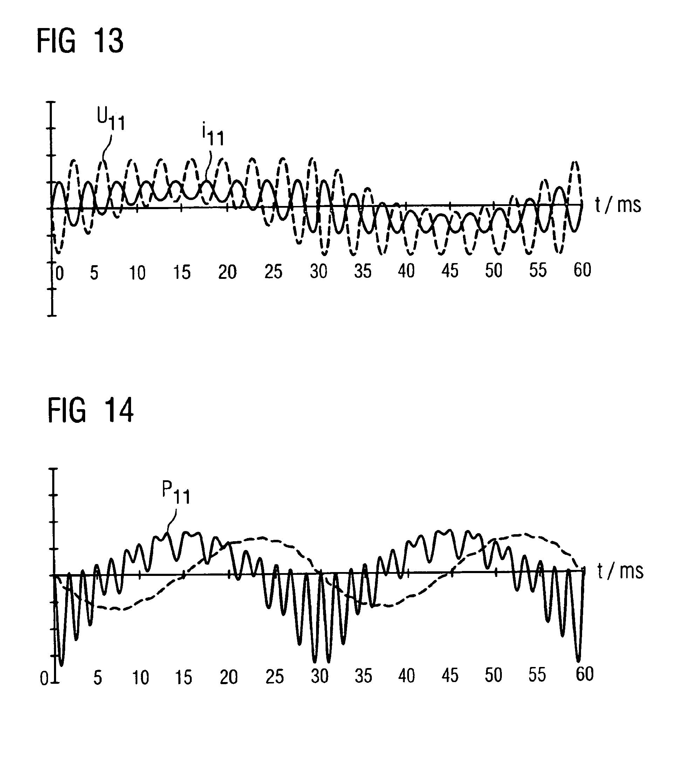

Die Ansteuerung kann zweckmäßig wieder so erfolgen, dass die Grundschwingungen von Netzspannung $u_N$ und Netzstrom $i_N$ die gleiche Phasenlage aufweisen. Die Zeitlichen Verläufe von Zweigspannung $u_{11}$ und Zweigstrom $i_{11}$ sind in Figur 13 dargestellt. Dort ist die gleichmäßige Ausnutzung bezüglich Strom und Spannung zu erkennen. Die Zweigleistung $p_{11} = u_{11}*i_{11}$ sowie den pulsierenden Anteil der zugehörigen Energie zeigt Figur 14. Erkennbar ist die gegenüber dem in Figur 10 dargestellten Beispiel um etwa den Faktor 2 erhöhte, mit doppelter Netzfrequenz pulsierende Energie.

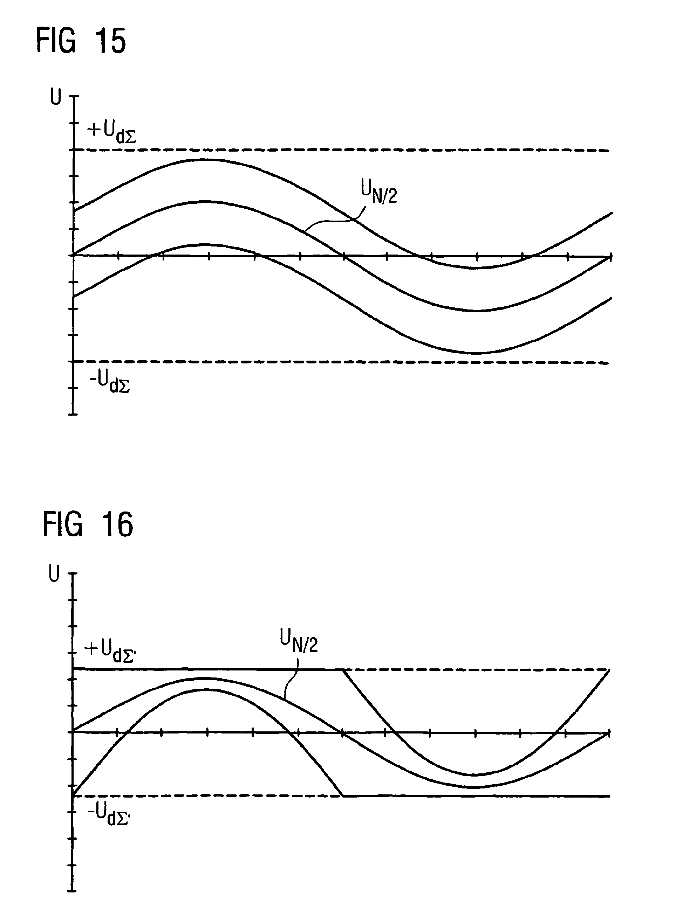

Die Figuren 15 und 16 zeigen einen Vergleich der bisherigen mit der erfindungsgemäßen Ansteuerung bezüglich der Summe der Kondensatorspannungen $u_{d\Sigma}$ und $u_{d\Sigma'}$ der Submodule eines Stromrichterzweiges 11, 12, 21, 22. Für die Transformatorprimärspannung $u_T$ ist die Differenz der halben Netzspannung $u_N/2$ und der Summe der Kondensatorspannungen $u_{d\Sigma}$ der Submodule des Zweiges nutzbar. Werden die Kondensatorspannungen $u_d$, wie Figur 16 zeigt, so gesteuert, dass die Summe der Kondensatorspannungen $u_{d\Sigma}$ ihren maximal möglichen Wert annimmt, so erhöht sich die ausnutzbare Spannungsdifferenz zwischen der halben Netzspannung $u_N/2$ und der Summe der Kondensatorspannungen $u_{d\Sigma'}$ und es ergibt sich für die Transformatorprimärspannung $u_T$ ein Spannungsverlauf, wie er in Figur 11 bereits gezeigt wurde.

Durch das erfindungsgemäße Steuerverfahren lässt sich der Aufwand für Ansteuerung, Energieversorgung und Hochspannungsisolation durch Reduktion der Anzahl an Submodulen deutlich senken.

Wird das Ansteuerverfahren noch so erweitert, dass statt einer konstanten Grundschwingung des Transformatorprimärstromes $i_T$ dieser so geführt wird, dass sich in den Zweigen ein Zeitverlauf des Strombetrages einstellt, der über der Zeit etwa gleich große Maximalwerte aufweist, so lässt sich eine zusätzliche Aufwandsreduktion erreichen.


**Patentansprüche**

1. Steuerverfahren für einen Stromrichter, der als zwei- oder dreiphasige Brückenschaltung mit einem Transformator (T) aufgebaut ist, mit Brückenzweigen, die aus einer beliebigen Anzahl identischer Submodule bestehen, wobei die Leistung des Netzes in Kondensatoren (C) der Submodule zwischengespeichert wird, **dadurch gekennzeichnet, dass** die Primärspannung des Transformators aus der Netzspannung ($U_N$) und den Spannungen an den Kondensatoren (C) so gebildet wird, dass die Primärspannung beim zeitlichen Maximum der Netzspannung verringert und beim zeitlichen Nulldurchgang der Netzspannung erhöht wird durch Aufladung und Entladung der Kondensatoren (C).

2. Steuerverfahren nach Anspruch 1, **dadurch gekennzeichnet, dass** die Stromamplituden in den einzelnen Stromrichterzweigen (11, 12, 21, 22) so gesteuert werden, dass sie über der Zeit näherungsweise gleich groß sind.

3. Steuerverfahren nach einem der vorhergehenden Ansprüche, **dadurch gekennzeichnet, dass** an der Brückenschaltung die Ausgangsspannung der Brückendiagonale auf einen Mittelfrequenztransformator (T) geführt wird, dessen Sekundärwicklung(en) mit mindestens einem Spannungsumrichter beschaltet ist.

**Claims**

1.  Control method for a converter, which is in the form of a two-phase or three-phase bridge circuit with a transformer (T), having bridge arms which have any desired number of identical sub-modules, with the power of the power supply system being temporarily stored in capacitors (C) in the sub-modules, **characterized in that** the primary voltage of the transformer is formed from the power supply system voltage ($U_N$) and the voltages across the capacitors (C), such that the primary voltage is reduced at the time of the maximum power supply system voltage and is increased at the time of the zero crossing of the power supply system voltage by the capacitors (C) being charged and discharged.

2.  Control method according to Claim 1, **characterized in that** the current amplitudes in the individual converter arms (11, 12, 21, 22) are controlled such that they are approximately at equal magnitude over time.

3.  Control method according to one of the preceding claims, **characterized in that** the output voltage from the bridge diagonal of the bridge circuit is passed to a medium-frequency transformer (T) whose secondary winding or windings is or are connected to at least one voltage converter.

**Revendications**

1.  Procédé de commande d'un convertisseur, qui est sous la forme d'un circuit en pont biphasé ou triphasé ayant un transformateur (T ) et ayant des branches de pont qui sont constituées d'un nombre quelconque de sous-modules identiques, la puissance du secteur étant emmagasinée intermédiairement dans des condensateurs (C ) des sous-modules, **caractérisé en ce que** la tension primaire du transformateur est formée de la tension ($U_N$ ) du secteur et des tensions sur les condensateurs (C ) de sorte que la tension primaire est diminuée lors du maximum dans le temps de la tension du secteur et est augmentée lors du passage par zéro dans le temps de la tension du secteur par charge et décharge des condensateurs (C ).

2.  Procédé de commande suivant la revendication 1, **caractérisé en ce que** les amplitudes de courant dans les diverses branches (11, 12, 21, 22) du convertisseur sont commandées de manière à être à peu près égales dans le temps.

3.  Procédé de commande suivant l'une des revendications précédentes, **caractérisé en ce qu'**au circuit en pont, la tension de sortie des diagonales du pont est appliquée sur un transformateur (T ) de fréquence médian, dont l'enroulement ou les enroulements secondaires sont reliés à au moins un convertisseur de tension.

FIG 1

FIG 2

## FIG 3

## FIG 4

FIG 5

FIG 6

## FIG 7

## FIG 8

FIG 9

FIG 10

EP 1 480 322 B1

FIG 11

FIG 12

13

FIG 13

FIG 14

## FIG 15

## FIG 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ERICKSON et al.** *A New Family of Matrix Converters,* 2001, 1515-1520